# EUROPÄISCHE PATENTSCHRIFT

(11) **EP 4 068 223 B1**
(45) Veröffentlichungstag und Bekanntmachung des Hinweises auf die Patenterteilung: **22.04.2026**
(21) Anmeldenummer: 22163978.4
(22) Anmeldetag: 24.03.2022
(51) Int. Cl.: G06V 10/82, G06V 20/58

(54) **VERFAHREN UND SYSTEM ZUR BESTIMMUNG DER BODENEBENE MIT EINEM KÜNSTLICHEN NEURONALEN NETZ**
METHOD AND SYSTEM FOR DETERMINING THE GROUND LEVEL WITH AN ARTIFICIAL NEURAL NETWORK
PROCÉDÉ ET SYSTÈME DE DÉTERMINATION DU NIVEAU DU SOL À L'AIDE D'UN RÉSEAU DE NEURONES ARTIFICIELS

(30) Priorität: 29.03.2021 DE 102021107904
(43) Veröffentlichungstag der Anmeldung: 05.10.2022
(73) Patentinhaber: AUMOVIO Autonomous Mobility Germany GmbH, 85057 Ingolstadt (DE); VOLKSWAGEN AG, 38440 Wolfsburg (DE)
(72) Erfinder: HEINRICH, Stefan, 90411 Nürnberg (DE); KRÖKEL, Dieter, 90411 Nürnberg (DE); FECHNER, Thomas, 90411 Nürnberg (DE); KURZ, Heiko Gustav, 30177 Hannover (DE)
(74) Vertreter: Wolf, Gerhard

(56) Entgegenhaltungen:
- DE-A1- 102016 014 783
- DE-A1- 102017 120 112
- DE-A1- 19 926 559
- US-A1- 2020 210 726
- WANG QIANG ET AL: "FADNet: A Fast and Accurate Network for Disparity Estimation", 2020 IEEE INTERNATIONAL CONFERENCE ON ROBOTICS AND AUTOMATION (ICRA), IEEE, 31 May 2020 (2020-05-31), pages 101 - 107, XP033826374, DOI: 10.1109/ICRA40945.2020.9197031

## Beschreibung

Die Erfindung betrifft ein Verfahren und ein System zur Ermittlung der Fahrbahnebene im Umgebungsbereich eines Fahrzeugs sowie ein Fahrzeug mit einem solchen System.

Für autonome Fahrfunktionen werden Sensorsysteme benötigt, die auch kleine Hindernisse in großen Entfernungen zuverlässig detektieren können. Zur Detektion von derartigen Hindernissen können LIDAR-Systeme oder Stereokamera-Systeme verwendet werden, da diese die Möglichkeit bieten, das Umfeld dreidimensional abzubilden. So können gleichzeitig Größe und Entfernung der Hindernisse und der Freiraum erfasst werden. Stereokamera-Systeme haben den Vorteil, dass diese eine deutlich höhere laterale Auflösung als LIDAR Systeme haben, während LIDAR Systeme eine sehr genaue Entfernungsbestimmung erlauben.

Besondere Bedeutung bei autonomen Fahrfunktionen kommt der Erkennung von Hindernissen auf der Fahrbahn zu. Insbesondere ist es wichtig, beispielsweise unterscheiden zu können, ob sich auf der Fahrbahn lediglich ein kleiner Gegenstand befindet, der überfahren werden kann oder ob es sich um ein Hindernis handelt, das nicht überfahrbar ist und damit eine Notbremsung oder ein Ausweichmanöver eingeleitet werden muss.

Hierzu ist es wichtig, die Höhe eines Objekts, das sich auf der Fahrbahn befindet, möglichst genau bestimmen zu können, und zwar auch in einem Abstand zum Auto von beispielsweise 35m oder mehr, um genügend Zeit zur Einleitung einer Notbremsung oder eines Ausweichmanövers zu haben.

Problematisch bei der Verwendung von LIDAR-Sensoren ist, dass diese zwar eine hohe Entfernungsauflösung bieten, jedoch ab ca. 35m Entfernung zum Fahrzeug die Laserstrahlen von der Fahrbahn total reflektiert werden, so dass keine Erfassung der Fahrbahnebene mehr möglich ist.

Problematisch bei den bisher bekannten Stereokamerasystemen ist, dass diese ein hohes Signal-zu-Rausch-Verhältnis aufweisen und damit die Bestimmung der Fahrbahnebene bzw. Objekten auf der Fahrbahnebene nur unzureichend möglich ist.

Die Druckschrift DE 10 2017 120 112 A1 offenbart eine Tiefenkartenschätzung mit Stereobildern. Mittels eines neuronalen Netzes werden Tiefeninformationen basierend auf Stereobildinformationen eines Stereokamerasystems ermittelt.

Ausgehend hiervon ist es Aufgabe der Erfindung, ein Verfahren zur Ermittlung der Fahrbahnebene im Umgebungsbereich eines Fahrzeugs anzugeben, das eine zuverlässige und hochgenaue Ermittlung der Fahrbahnebene ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Ermittlung der Fahrbahnebene im Umgebungsbereich eines Fahrzeugs ist Gegenstand des nebengeordneten Patentanspruchs 10 und ein Fahrzeug mit einem solchen System ist Gegenstand des nebengeordneten Patentanspruchs 15.

Gemäß einem ersten Aspekt bezieht sich die Erfindung auf ein Verfahren zur Ermittlung der Fahrbahnebene im Umgebungsbereich eines Fahrzeugs. Das Fahrzeug weist ein Stereokamerasystem zur Erfassung von Stereobildern des Umgebungsbereichs des Fahrzeugs auf. Das Stereokamerasystem weist zumindest zwei Kameras auf, die an unterschiedlichen Positionen des Fahrzeugs vorgesehen sind. Zur Erhöhung der Genauigkeit der Entfernungsbestimmung sind die Kameras vorzugsweise mit einem Abstand größer als 0,8m, insbesondere größer als 1m zueinander beabstandet. Vorzugsweise sind die Kameras an der Windschutzscheibe oder jeweils eine Kamera in einen Frontscheinwerfer integriert. Zudem weist das Fahrzeug ein künstliches neuronales Netz auf, das die von dem Stereokamerasystem bereitgestellten Bildinformationen verarbeitet. Das neuronale Netz empfängt die Bildinformationen der Kameras und ermittelt Disparitätsinformationen zu diesen Bildinformationen. Die Disparitätsinformationen geben insbesondere den Abstand an, den korrespondierende Pixel der Bildinformationen der beiden Kameras aufweisen. Dieser Abstand resultiert aus dem unterschiedlichen Betrachtungswinkel des Szenenbereichs, den dieses Pixel darstellt, und der daraus resultierenden Parallaxe. Basierend auf den Disparitätsinformationen werden Abstandsinformationen berechnet, die Informationen bezüglich des Abstands der auf den Bildinformationen dargestellten Objekten zu dem Stereokamerasystem oder dem Fahrzeug enthalten. Allgemein gesprochen geben die Abstandsinformationen die Tiefe an, in der sich das dargestellte Objekt in Bezug auf das Fahrzeug befindet. Dabei kann sich der Abstand bzw. die Tiefe auf unterschiedliche Referenzpunkte beziehen, beispielsweise einen Referenzpunkt des Stereokamerasystems oder einen Referenzpunkt des Fahrzeugs. Aus den Abstandsinformationen werden anschließend Fahrbahnabstandsinformationen extrahiert. Das bedeutet insbesondere, dass mittels einer Informationseingrenzung die gesamten Abstandsinformationen auf solche Informationen eingegrenzt werden, die die Fahrbahn betreffen. Es sei jedoch angemerkt, dass die Fahrbahnabstandsinformationen nicht ausschließlich Abstandsinformationen der Fahrbahn enthalten müssen, sondern auch noch Informationen zum Abstand von anderen Objekten, insbesondere nicht feststehenden Objekten enthalten können.

Zuletzt wird basierend auf den Fahrbahnabstandsinformationen die Fahrbahnebene ermittelt, wobei Ermitteln auch eine Schätzung der Fahrbahnebene bedeuten kann.

Der technische Vorteil des vorgeschlagenen Verfahrens besteht darin, dass durch die Schätzung der Disparität durch das neuronale Netz eine rauscharme Disparitätsinformation und damit eine genaue Abstandsinformation ermittelt werden kann, die auch Abstandsinformationen in einem Entfernungsbereich größer als 35m bezogen auf das Fahrzeug möglich macht. Durch die Extraktion der Fahrbahnabstandsinformationen und die Ermittlung der Fahrbahnebene auf Grundlage dieser Fahrbahnabstandsinformationen wird eine verbesserte Erkennbarkeit von Hindernissen auf der Fahrbahn möglich.

Gemäß einem Ausführungsbeispiel wird die Extraktion der Fahrbahnabstandsinformationen aus den Abstandsinformationen basierend auf Objektinformationen vollzogen, die durch ein Umfeldmodell eines Fahrassistenzsystems des Fahrzeugs bereitgestellt werden. Das Umfeldmodell des Fahrzeugs enthält beispielsweise Objekte, die durch eine fahrzeugeigene Sensorik detektiert und/oder klassifiziert wurden und/oder durch eine Karte bereitgestellt werden. Die Objekte können beispielsweise Fahrzeuge, Häuser, Fußgänger, Radfahrer etc. sein. Die Extraktion der Fahrbahnabstandsinformation kann dadurch erfolgen, dass diese aus dem Umfeldmodell bekannten Objekte aus den Abstandsinformationen entfernt werden, so dass die Bestimmung der Fahrbahnebene nicht durch diese Objekte beeinflusst wird. Dadurch wird eine genauere Fahrbahnebenenbestimmung möglich.

Gemäß einem Ausführungsbeispiel wird die Extraktion der Fahrbahnabstandsinformationen aus den Abstandsinformationen dadurch vollzogen wird, dass von einem Stereobild oder den im Stereobild enthaltenen Abstandsinformationen aus einem Umfeldmodell eines Fahrassistenzsystems des Fahrzeugs erhaltene Informationen subtrahiert und/oder eliminiert werden. Die Informationen des Umfeldmodells können dabei wiederum Objekte aus dem Fahrzeugumfeld sein, die in dem Umfeldmodell enthalten sind. Dadurch wird wiederum eine genauere Fahrbahnebenenbestimmung ermöglicht.

Gemäß einem Ausführungsbeispiel kompensiert das künstliche neuronale Netz Kalibrierungsungenauigkeiten, die durch eine Relativbewegung der beiden Kameras des Stereokamerasystems zueinander entstehen, durch eine nichtlineare Korrelation der Bildinformationen. Das künstliche neuronale Netz ist vorzugsweise dazu trainiert, die Kalibrierung der Kameras des Stereokamerasystems aus der erkannten Disparität zu erkennen und zu kompensieren. Dabei werden dem neuronalen Netz beim Training Bildsequenzen zugeführt, die aus unterschiedlichen Blickrichtungen aufgenommen sind und geeignet gelabelt sind, d.h. zu den einzelnen Pixeln jeweils Disparitätsinformationen und/oder Abstandsinformationen vorliegen. Damit können die Gewichtsfaktoren des neuronalen Netzes derart gewählt werden, dass der Fehler zwischen der erkannten Disparität und der durch die Trainingsdaten vorgegebenen Disparität bzw. der Fehler zwischen den Abstandsinformationen, die durch das neuronale Netz bestimmt werden und den Abstandsinformationen der Trainingsdaten minimiert wird.

Gemäß einem Ausführungsbeispiel wird basierend auf der Fahrbahnebene geprüft, ob im Umgebungsbereich des Fahrzeugs auf der Fahrbahn Objekte vorhanden sind. Es wird beispielsweise anhand der Fahrbahnebene und den Abstandsinformationen, die durch das Stereokamerasystem bereitgestellt werden, ermittelt, ob in den Stereobildern zumindest ein Bereich vorhanden ist, der gegenüber der Fahrbahnebene nach oben hin vorsteht und damit ein Objekt bzw. ein Hindernis darstellten könnte. Somit ist es möglich, basierend auf der detektierten Fahrbahnebene eine Objekterkennung von Objekten auf der Fahrbahnoberfläche zu vollziehen.

Gemäß einem Ausführungsbeispiel wird basierend auf den Informationen bezüglich der Fahrbahnebene die Größe eines Objekts und/oder die Höhe eines Objekts im Fahrbahnbereich geprüft. So kann beispielsweise die Höhe eines Objekts dadurch geprüft werden, wie weit das Objekt gegenüber der ermittelten Fahrbahnebene nach oben hin vorsteht. Die Größe des Objekts kann basierend auf der detektierten lateralen Breite und/oder Tiefe (d.h. der Dimension in die Bildebene hinein) ermittelt werden. Über die Größe bzw. Höhe des Objekts lässt sich feststellen, ob das Objekt überfahrbar ist oder ein Ausweichvorgang bzw. ein Notbremsmanöver eingeleitet werden muss.

Gemäß einem Ausführungsbeispiel wird basierend auf der Höhe eines erkannten Objekts, d.h. der geometrischen Information, wie weit das Objekt gegenüber der Fahrbahnebene vorsteht, das Objekt klassifiziert. Die Klassifizierung kann beispielsweise den Objekttyp und/oder die Objektgröße angeben oder das Objekt als überfahrbar oder nichtüberfahrbar kennzeichnen. Auf Basis der Klassifizierung ist es möglich, dass das Fahrassistenzsystem klassifizierungsabhängige Entscheidungen trifft.

Gemäß einem Ausführungsbeispiel wird das künstliche neuronale Netz basierend auf Informationen von Stereobildern, die während der Fahrt des Fahrzeugs aufgenommen werden und als der Fahrbahn zugeordnete Informationen gekennzeichnet sind, nachtrainiert. Dadurch ist es möglich, durch im laufenden Betrieb des Systems erhaltene Informationen das neuronale Netz nachzutrainieren und damit die Fahrbahnebenenschätzung zu verbessern.

Gemäß einem Ausführungsbeispiel stellt das künstliche neuronale Netz die Disparitätsinformationen bereit und die Berechnung der Abstandsinformationen aus den Disparitätsinformationen erfolgt in einer separaten Recheneinheit. Damit kann die Komplexität des neuronalen Netzes reduziert werden. Alternativ stellt das künstliche neuronale Netz die Abstandsinformationen als Ausgangsinformation bereit. Dadurch werden durch das Stereokamerasystem direkt Abstandsinformationen bereitgestellt, die durch das Fahrassistenzsystem direkt ausgewertet werden können.

Gemäß einem Ausführungsbeispiel weisen die Kameras Inertialsensoren auf, mittels denen Bewegungsänderungen der jeweiligen Kamera detektierbar sind. Die Inertialsensoren können beispielsweise translatorische Bewegungen der Kamera in drei Raumrichtungen eines kartesischen Koordinatensystems und rotative Bewegungen um die drei Raumachsen des kartesischen Koordinatensystems detektieren. Dadurch können absolute Positions- bzw. Ausrichtungsveränderungen der jeweiligen Kamera und Änderungen der relativen Position bzw. Ausrichtung der beiden Kameras zueinander (extrinsische Kalibrierungsparameter) erkannt werden.

Gemäß einem Ausführungsbeispiel werden Informationen der Inertialsensoren der Kameras dazu verwendet, ein Initialtraining des neuronalen Netzes vorzunehmen. Vorzugsweise weisen die Trainingsdaten Inertialsensorinformationen auf, die Positions- bzw. Ausrichtungsveränderungen der Kameras nachbilden. Dadurch kann das neuronale Netz damit trainiert werden, Kalibrierungsungenauigkeiten zu erkennen und zu kompensieren.

Gemäß einem Ausführungsbeispiel werden Informationen der Inertialsensoren der Kameras dazu verwendet, im laufenden Betrieb des Stereokamerasystems die Positions- bzw. Ausrichtungsveränderungen der Kameras zu erfassen und dadurch Kalibrierungsveränderungen des Stereokamerasystems zu kompensieren. Vorzugsweise werden die Informationen der Inertialsensoren der Kameras in einem Online-Training dazu verwendet, die Gewichtungsfaktoren des neuronalen Netzes anzupassen, um das neuronale Netz an die Kalibrierungsveränderungen anzupassen.

Gemäß einem Ausführungsbeispiel werden weitere, von Sensoren bereitgestellte Informationen dazu verwendet, Kalibrierungsveränderungen zu erkennen und zu kompensieren. So können beispielsweise Informationen eines Temperatursensors dazu verwendet werden, temperaturabhängige Kalibrierungsveränderungen zu kompensieren.

Gemäß einem weiteren Aspekt betrifft die Erfindung ein System zur Erkennung der Fahrbahnebene im Umgebungsbereich eines Fahrzeugs. Das System umfasst ein Stereokamerasystem zur Erfassung von Stereobildern des Umgebungsbereichs des Fahrzeugs und ein künstliches neuronales Netz zur Verarbeitung der von dem Stereokamerasystem bereitgestellten Bildinformationen. Das neuronale Netz ist dazu ausgebildet, Disparitätsinformationen des Umgebungsbereichs des Fahrzeugs zu ermitteln. Das neuronale Netz oder eine vom neuronalen Netz getrennt vorgesehene Recheneinheit ist dazu konfiguriert, basierend auf den Disparitätsinformationen Abstandsinformationen zu berechnen, die Informationen bezüglich des Abstands der auf den Bildinformationen dargestellten Objekten zu dem Stereokamerasystem oder dem Fahrzeug enthalten. Darüber hinaus ist das neuronale Netz oder die vom neuronalen Netz separat vorgesehene Recheneinheit dazu konfiguriert, Fahrbahnabstandsinformationen aus den Abstandsinformationen zu extrahieren und aus den Fahrbahnabstandsinformationen Informationen bezüglich der Fahrbahnebene zu ermitteln.

Gemäß einem Ausführungsbeispiel ist das System zum Empfang von Objektinformationen ausgebildet, die durch ein Umfeldmodell eines Fahrassistenzsystems des Fahrzeugs bereitgestellt werden. Ferner ist das System dazu ausgebildet, die Extraktion der Fahrbahnabstandsinformationen aus den Abstandsinformationen basierend auf den Objektinformationen zu vollziehen. Das Umfeldmodell des Fahrzeugs enthält beispielsweise Objekte, die durch eine fahrzeugeigene Sensorik detektiert und/oder klassifiziert wurden und/oder durch eine Karte bereitgestellt werden. Die Objekte können beispielsweise Fahrzeuge, Häuser, Fußgänger, Radfahrer etc. sein. Die Extraktion der Fahrbahnabstandsinformation kann dadurch erfolgen, dass diese aus dem Umfeldmodell bekannten Objekte aus den Abstandsinformationen entfernt werden, so dass die Bestimmung der Fahrbahnebene nicht durch diese Objekte beeinflusst wird. Dadurch wird eine genauere Fahrbahnebenenbestimmung möglich.

Gemäß einem Ausführungsbeispiel ist das System dazu konfiguriert, die Extraktion der Fahrbahnabstandsinformationen aus den Abstandsinformationen dadurch zu vollziehen wird, dass von einem Stereobild oder den im Stereobild enthaltenen Abstandsinformationen aus einem Umfeldmodell eines Fahrassistenzsystems des Fahrzeugs erhaltene Informationen subtrahiert und/oder eliminiert werden. Die Informationen des Umfeldmodells können dabei wiederum Objekte aus dem Fahrzeugumfeld sein, die in dem Umfeldmodell enthalten sind. Dadurch wird wiederum eine genauere Fahrbahnebenenbestimmung ermöglicht.

Gemäß einem Ausführungsbeispiel ist das System dazu konfiguriert, basierend auf den Informationen bezüglich der Fahrbahnebene zu prüfen, ob im Umgebungsbereich des Fahrzeugs auf der Fahrbahn Objekte vorhanden sind.

Gemäß einem Ausführungsbeispiel ist das System dazu konfiguriert, basierend auf den Informationen bezüglich der Fahrbahnebene die Größe eines Objekts und/oder die Höhe eines Objekts im Fahrbahnbereich zu prüfen, wobei basierend auf der Höhe eines erkannten Objekts, d.h. der geometrischen Information, wie weit das Objekt gegenüber der Fahrbahnebene vorsteht, das Objekt klassifiziert wird.

Gemäß einem letzten Aspekt bezieht sich die Erfindung auf ein Fahrzeug umfassend ein vorgenanntes System gemäß einem der Ausführungsbeispiele.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung eines Stereokamerasystems, das mit einem künstlichen neuronalen Netz zur Bereitstellung von Stereobildern gekoppelt ist;
- Fig. 2: beispielhaft und schematisch ein Ablaufdiagramm zur Ermittlung der Fahrbahnebene und zur Erkennung von Objekten auf der Fahrbahn basierend auf der ermittelten Fahrbahnebene; und
- Fig. 3: beispielhaft eine schematische Darstellung der Verfahrensschritte zur Ermittlung bzw. Schätzung der Fahrbahnebene.

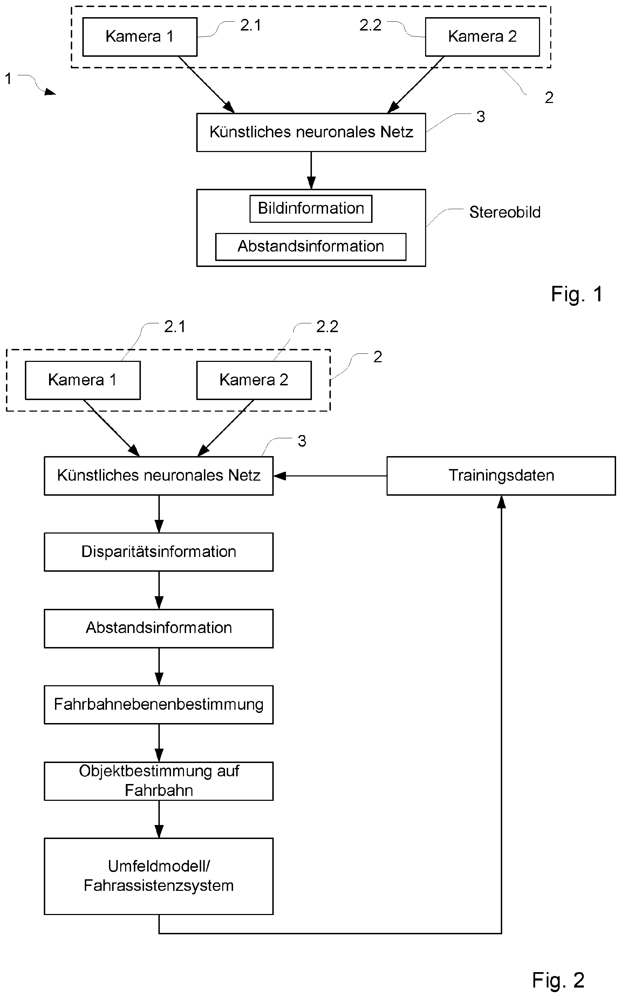

Figur 1 zeigt beispielhaft ein schematisches Blockdiagramm eines Systems 1 zur Ermittlung der Fahrbahnebene.

Das System weist ein Stereokamerasystem 2 auf, das zumindest zwei Kameras 2.1, 2.2 umfasst. Das Stereokamerasystem 2 nimmt dabei Bildinformationen der Fahrzeugumgebung, insbesondere eines Bereichs in Vorwärtsfahrtrichtung vor dem Fahrzeug, als Bildpaare auf, d.h. es werden zu gleichen Zeitpunkten jeweils ein Bild mit der ersten Kamera 2.1 und ein Bild mit einer zweiten Kamera 2.2 aufgenommen, die die gleiche Szene jedoch aus unterschiedlichen Blickrichtungen zeigen, da die Kameras 2.1, 2.2 an unterschiedlichen Positionen im Fahrzeug angeordnet sind.

Beispielsweise können die Kameras 2.1, 2.2 in den Scheinwerfern des Fahrzeugs eingebaut sein. Alternativ können die Kameras 2.1, 2.2 auch in den Frontbereich des Fahrzeugs oder in die Windschutzscheibe integriert sein. Die Kameras 2.1, 2.2 haben vorzugsweise einen Abstand größer als 0,5m zueinander, um über eine möglichst große Basisbreite eine hohe Entfernungsauflösung zu erreichen.

Das System weist ferner ein künstliches neuronales Netz 3 auf, das zur Verarbeitung der vom Stereokamerasystem 2 bereitgestellten Bildinformationen ausgebildet ist. Das künstliche neuronale Netz 3 kann beispielsweise ein tiefes neuronales Netz sein, insbesondere ein Faltungsnetzwerk (CNN: convolutional neural network).

Das neuronale Netz 3 empfängt die vom Stereokamerasystem 2 bereitgestellten Bildinformationen und schätzt Disparitätsinformationen zu diesen Bildinformationen. Die Disparitätsinformationen geben dabei an, wie hoch der laterale Versatz zwischen den einzelnen Pixeln der Bildinformationen eines Bildpaares ist. Dieser laterale Versatz ist ein Maß für den Abstand, den der mit dem Pixel dargestellte Szenenbereich vom Fahrzeug bzw. von dem Stereokamerasystem 2 hat.

Das neuronale Netz 3 ist dazu ausgebildet, Disparitätsinformationen zu schätzen und dabei Kalibrierungsungenauigkeiten, die durch eine Veränderung der extrinsischen Parameter des Stereokamerasystems 2 entstehen, zu kompensieren. Hierzu wird das neuronale Netz 3 mittels Trainingsdaten, bei denen der Abstand aller Pixel zum Stereokamerasystem bekannt sind, trainiert und das neuronale Netz 3 zur Erkennung der Disparität optimiert.

Das neuronale Netz 3 nutzt dabei einen nichtlinearen Korrelator, um die Disparitätsinformationen zu ermitteln. Das neuronale Netz 3 empfängt die vom Stereokamerasystem 2 bereitgestellten Bildinformationen und schätzt Disparitätsinformationen zu diesen Bildinformationen. Die Disparitätsinformationen geben dabei an, wie hoch der laterale Versatz zwischen den einzelnen Pixeln der Bildinformationen eines Bildpaares ist. Dieser laterale Versatz ist ein Maß für den Abstand, den der mit dem Pixel dargestellte Szenenbereich vom Fahrzeug bzw. von dem Stereokamerasystem 2 hat. Damit können aus den Disparitätsinformationen Abstandsinformationen gewonnen werden, die angeben, wie weit ein mit einem Pixel dargestellter Szenenbereich vom Fahrzeug bzw. von dem Stereokamerasystem 2 entfernt ist. Dadurch können durch das neuronale Netz 3 Stereobilder bereitgestellt werden, die neben einer zweidimensionalen Bildinformation in Form von pixelbezogenen Farbwerten auch Abstandsinformationen zu jedem Pixel enthalten.

Das neuronale Netz 3 kann beispielsweise in einem Steuergerät des Stereokamerasystems 2 prozessiert werden. Alternativ kann das neuronale Netz 3 auch in einem Steuergerät betrieben werden, das vom Stereokamerasystem 2 getrennt vorgesehen ist.

Das neuronale Netz 3 kann durch Trainingsdaten trainiert sein, d.h. die Gewichtungsfaktoren des neuronalen Netzes 3 sind durch eine Trainingsphase derart angepasst, dass das neuronale Netz 3 Disparitätsinformationen und/oder Abstandsinformationen zu den vom Stereokamerasystem 2 aufgenommenen Bildinformationen bereitstellt.

Die Trainingsdaten (auch als ground-truth-Informationen bezeichnet) weisen Bildpaare auf, die die gleiche Szene jeweils mit unterschiedlichen Positionen und Ausrichtungen der Kameras 2.1, 2.2 darstellen. Die Trainingsdaten weisen dabei zudem zu jedem Bildpixel Abstandsinformationen auf, so dass basierend auf den Trainingsdaten der Fehler zwischen dem Berechnungsergebnis des neuronalen Netzes 3 und den Trainingsdaten ermittelt werden kann und die Gewichtungsfaktoren des neuronalen Netzes 3 sukzessive derart angepasst werden, dass sich der Fehler reduziert wird.

Die vom neuronalen Netz 3 bereitgestellten Disparitätsinformationen werden, wie in Fig. 2 gezeigt, anschließend dazu verwendet, Abstandsinformationen zu berechnen. Die Abstandsinformationen werden vorzugsweise zu jedem Pixel der Bildinformationen berechnet und geben an, wie weit der mit dem Pixel dargestellte Szenenbereich vom Fahrzeug bzw. von dem Stereokamerasystem 2 entfernt ist.

Das Stereobild enthält Informationen über einen vor dem Fahrzeug liegenden Fahrbahnbereich. Der Fahrbahnbereich kann beispielsweise u.a. auch einen mehr als 35m vor dem Fahrzeug liegenden Fahrbahnbereich betreffen, der mit Radarsensorik bzw. LIDAR-Sensoren nicht erfassbar ist, da die von diesen Sensoren ausgestrahlte elektromagnetische Strahlung ab ca. 35m Entfernung vom Fahrzeug eine Totalreflexion an der Fahrbahnoberfläche erfährt.

Die Erfassung des Fahrbahnbereichs mittels des Stereokamerasystems 2 ist vorteilhaft, da mittels der in den Stereobildern enthaltenen Abstandsinformation die Fahrbahnebene bestimmt werden kann. Nach der Bestimmung der Fahrbahnebene kann anschließend analysiert werden, ob bestimmte Bereiche des Stereobildes über diese Fahrbahnebene vorstehen. Derartige vorstehende Bereiche können ein auf der Fahrbahn liegendes Objekt bzw. ein Hindernis angeben, so dass nach Erkennung dieses Objekts bzw. Hindernisses und ggf. dessen Klassifizierung entschieden werden kann, ob es sich um ein überfahrbares Hindernis handelt oder ein Ausweichmanöver eingeleitet werden muss.

Das Fahrzeug weist vorzugsweise ein Fahrassistenzsystem auf, das ein Umfeldmodell bereitstellt, in dem Objekte in der Umgebung des Fahrzeugs enthalten sind. Das Umfeldmodell kann durch eine beliebige Sensorik des Fahrzeugs und/oder durch einen Zugriff auf Karteninformationen erzeugt werden.

Vorzugsweise werden zur Bestimmung der Fahrbahnebene diejenigen Objekte aus den Stereobildern bzw. zumindest den Abstandsinformationen, die in den Stereobildern enthalten sind, entfernt, die in dem Umfeldmodell vorhanden sind. In anderen Worten werden Fahrbahnabstandsinformationen dadurch extrahiert, dass Objekte aus dem Umfeldmodell von den Stereobildern bzw. den Abstandsinformationen ausgeschlossen werden. Dadurch werden die Stereobilder bzw. die Abstandsinformationen in ihrem Informationsgehalt reduziert, so dass die Bestimmung der Fahrbahnebene basierend auf den im Informationsgehalt reduzierten Stereobildern bzw. Abstandsinformationen präziser erfolgen kann.

Das Entfernen der Objekte aus dem Umfeldmodell kann beispielsweise dadurch erfolgen, dass Umfeldmodell-Informationen von den Stereobildern bzw. den Abstandsinformationen subtrahiert werden.

Die der Fahrbahnoberfläche zugeordneten Abstandsinformationen spannen vorzugsweise eine Fläche auf, die der Fahrbahnoberfläche entspricht.

Die Bestimmung bzw. Schätzung der Fahrbahnebene basierend auf den Stereobildern bzw. den Abstandsinformationen kann beispielsweise dadurch erfolgen, dass eine Ebene derart auf die der Fahrbahn zugeordneten Abstandsinformationen gelegt wird, dass der Gesamtfehler, der sich zwischen der angenommenen Fahrbahnebene und den der Fahrbahn zugeordneten Abstandsinformationen ergibt, minimiert wird. Dadurch kann eine Fahrbahnebene ermittelt werden, die die in den Stereobilden erkannte Fahrbahnoberfläche approximiert.

Falls aus dem Umfeldmodell oder den Stereobildern erkennbar ist, dass die Fahrbahn unterschiedlich hohe (z.B. Fahrbahn und Gehweg) oder unterschiedlich geneigte Fahrbahnabschnitte (z.B. gegenläufig seitlich geneigte Fahrbahnabschnitte) aufweist, kann die Fahrbahnebenenschätzung auch basierend auf mehreren unterschiedlichen Ebenen vollzogen werden, d.h. die Fahrbahnoberfläche wird mit mehr als einer angenommenen Fahrbahnebene approximiert.

Nach der Bestimmung der Fahrbahnebene können Bereiche des Stereobildes ermittelt werden, die über die Fahrbahnebene nach oben hin vorstehen.

Abhängig von der Größe des vorstehenden Bereichs und/oder der Höhe, die dieser Bereich in Bezug auf die Fahrbahnebene hat, kann in einem Analyseschritt bestimmt werden, ob es sich um ein Objekt handelt, das sich auf der Fahrbahn befindet. Beispielsweise können Größen- bzw. Höhenschwellwerte vorgegeben sein, die festlegen, wie groß bzw. wie hoch ein Bereich sein muss, um als auf der Fahrbahn befindliches Objekt bzw. Hindernis erkannt zu werden.

Zudem kann nach der Erkennung eines Objekts bzw. eines Hindernisses eine Klassifikation desselben vorgenommen werden.

Nach der Erkennung und ggf. Klassifizierung eines Objekts können Informationen zu diesem Objekt (beispielsweise örtliche Lage, geometrische Dimensionen, Objektklasse etc.) in des Umfeldmodell des Fahrzeugs aufgenommen werden. Dabei können die Informationen zu diesem Objekt an ein Steuergerät des Fahrassistenzsystems übermittelt werden, das dieses Umfeldmodell bereitstellt.

Wie in Fig. 2 ersichtlich, kann das künstliche neuronale Netz 3 durch ein Online-Training basierend auf den gewonnenen Fahrbahninformationen trainiert werden. Das Online-Training kann dabei entweder fortlaufend oder intermittierend, beispielsweise zu gewissen Zeitpunkten oder nach Ablauf einer gewissen Zeitspanne vollzogen werden.

Dabei können Informationen, die mittels des Stereokamerasystems 2 ermittelt wurden, als Trainingsdaten verwendet werden oder bestehende Trainingsdaten mit diesen Informationen angereichert bzw. modifiziert werden. Basierend auf diesen modifizierten Trainingsdaten kann anschließend das neuronale Netz trainiert werden, d.h. die Neuronen bzw. Gewichtungsfaktoren des neuronalen Netzes werden basierend auf den Trainingsdaten angepasst. In anderen Worten dienen die mittels des Stereokamerasystems 2 ermittelten Informationen als ground-truth-Datenbasis zum Retrainieren des künstlichen neuronalen Netzes. Dadurch kann die Bodenebenenerkennung fortlaufend verbessert werden.

Die Kameras 2.1, 2.2 des Stereokamerasystems 2 können jeweils Inertialsensoren aufweisen. Dabei sind die Inertialsensoren vorzugsweise in die jeweilige Kamera integriert. Die Inertialsensoren sind derart konfiguriert, dass mit diesen Bewegungsänderungen der Kameras 2.1, 2.2 erfassbar sind. Beispielsweise können die Inertialsensoren der jeweiligen Kamera 2.1, 2.2 translatorische Bewegungsänderungen entlang von drei Achsen eines kartesischen Koordinatensystems und rotatorische Bewegungsänderungen um diese drei Achsen herum erfassen.

Dadurch ist es möglich die absolute Position bzw. Ausrichtung der jeweiligen Kamera 2.1, 2.2 über die Zeit zu tracken, aber auch die relative Position bzw. Ausrichtung der beiden Kameras 2.1, 2.2 zu bestimmen bzw. nachzuverfolgen.

Basierend auf diesen Messdaten können die extrinsischen Parameter des Stereokamerasystems 2 und weitere Kalibrierparameter, beispielsweise die Basisbreite nachgeführt werden. Damit wird im Betrieb des Stereokamerasystems 2 weiterhin eine hochgenaue Onlinekalibrierung gewährleistet und unabhängig vom verwendeten Stereoverfahren die Berechnung hochgenauer Abstandsinformationen bzw. einer dichten Tiefenkarte ermöglicht.

Die Messdaten der Inertialsensoren der Kameras 2.1, 2.2 können zudem zum Training des neuronalen Netzes 3 verwendet werden. So können die Messwerte der Inertialsensoren dem neuronalen Netz 3 als Eingangsinformationen bereitgestellt werden, damit die Gewichtungsfaktoren des neuronalen Netzes basierend darauf angepasst werden können und damit die Bestimmung der Abstandsinformationen an die veränderte Ausrichtung der Kameras 2.1, 2.2 angepasst werden kann.

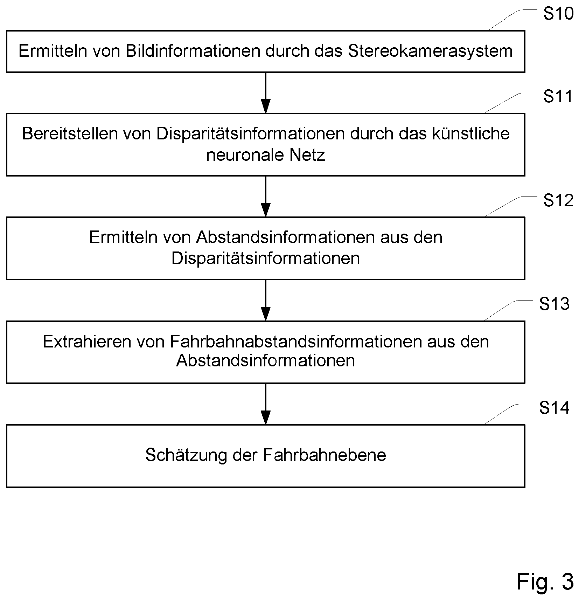

Fig. 3 zeigt ein Blockdiagramm, das die Schritte eines Verfahrens zur Ermittlung der Fahrbahnebene illustriert.

Zunächst werden Bildinformationen durch die Kameras 2.1, 2.2 des Stereokamerasystems 2 aufgenommen (S10). Bei den Bildinformationen handelt es sich um Bildpaare, wobei die Bilder eines Bildpaares zum gleichen Zeitpunkt aufgenommen werden, und zwar ein erstes Bild von der ersten Kamera 2.1 und ein zweites Bild von der zweiten Kamera 2.2.

Anschließend ermittelt das neuronale Netz Disparitätsinformationen des Umgebungsbereichs des Fahrzeugs (S11). Die Disparitätsinformationen geben insbesondere den Abstand korrespondierender Pixel in den Bildern eines Bildpaares an, wobei dieser Abstand aufgrund der unterschiedlichen Position der Kameras 2.1, 2.2 am Fahrzeug und der daraus resultierenden Parallaxe entsteht.

Anschließend werden basierend auf den Disparitätsinformationen Abstandsinformationen berechnet, die Informationen bezüglich des Abstands der auf den Bildinformationen dargestellten Objekten zu dem Stereokamerasystem 2 oder dem Fahrzeug enthalten (S12).

Aus diesen Abstandsinformationen werden anschließend Fahrbahnabstandsinformationen extrahiert (S13). Das bedeutet insbesondere, dass zumindest teilweise Informationen aus den Stereobildern bzw. den Abstandsinformationen der Stereobilder ausgeschlossen werden, von denen bekannt ist, dass diese nicht die Fahrbahn betreffen.

Zuletzt wird basierend auf den Fahrbahnabstandsinformationen die Fahrbahnebene ermittelt (S14). Dies geschieht dadurch, dass eine Ebene gesucht wird, deren geometrische Lage im Raum derart gewählt ist, dass die durch das Stereokamerasystem 2 bereitgestellten Abstandsinformationen einen möglichst geringen Abstand zu dieser Ebene haben. Insbesondere kann die Ebene dadurch bestimmt werden, dass der mittlere Fehler, der sich aus der Aufsummierung der Differenzen zwischen der durch das Stereokamerasystem 2 bereitgestellten Abstandsinformationen und der Ebene ergibt, minimal ist.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: System
- 2: Stereokamerasystem
- 2.1, 2.2: Kamera
- 3: künstliches neuronales Netz

## Patentansprüche

1. Verfahren zur Ermittlung der Fahrbahnebene im Umgebungsbereich eines Fahrzeugs, wobei das Fahrzeug ein Stereokamerasystem (2) zur Erfassung von Stereobildern des Umgebungsbereichs des Fahrzeugs und ein künstliches neuronales Netz (3) zur Verarbeitung der von dem Stereokamerasystem (2) bereitgestellten Bildinformationen aufweist, wobei das neuronale Netz (3) Disparitätsinformationen des Umgebungsbereichs des Fahrzeugs ermittelt, wobei basierend auf den Disparitätsinformationen Abstandsinformationen berechnet werden, die Informationen bezüglich des Abstands der auf den Bildinformationen dargestellten Objekten zu dem Stereokamerasystem (2) oder dem Fahrzeug enthalten, wobei Fahrbahnabstandsinformationen aus den Abstandsinformationen extrahiert werden, wobei basierend auf den Fahrbahnabstandsinformationen die Fahrbahnebene ermittelt wird, **dadurch gekennzeichnet, dass** die Fahrbahnebene dadurch bestimmt wird, dass eine Ebene gesucht wird, deren geometrische Lage im Raum derart gewählt ist, dass die durch das Stereokamerasystem (2) bereitgestellten Abstandsinformationen einen möglichst geringen Abstand zu dieser Ebene haben.

2. Verfahren nach Anspruch 1, **dadurch gekennzeichnet, dass** die Extraktion der Fahrbahnabstandsinformationen aus den Abstandsinformationen basierend auf Objektinformationen vollzogen wird, die durch ein Umfeldmodell eines Fahrassistenzsystems des Fahrzeugs bereitgestellt werden.

3. Verfahren nach Anspruch 1 oder 2, **dadurch gekennzeichnet, dass** die Extraktion der Fahrbahnabstandsinformationen aus den Abstandsinformationen dadurch vollzogen wird, dass von einem Stereobild oder den im Stereobild enthaltenen Abstandsinformationen aus einem Umfeldmodell eines Fahrassistenzsystems des Fahrzeugs erhaltene Informationen subtrahiert und/oder eliminiert werden.

4. Verfahren nach einem der vorhergehenden Ansprüche, **dadurch gekennzeichnet, dass** das künstliche neuronale Netz (3) Kalibrierungsungenauigkeiten, die durch eine Relativbewegung der beiden Kameras (2.1, 2.2) des Stereokamerasystems (2) zueinander entstehen, durch eine nichtlineare Korrelation der Bildinformationen kompensiert, und zwar derart, dass das künstliche neuronale Netz (3) dazu trainiert ist, die Kalibrierung der Kameras (2.1, 2.2) des Stereokamerasystems (2) aus der erkannten Disparität zu erkennen und zu kompensieren.

5. Verfahren nach einem der vorhergehenden Ansprüche, **dadurch gekennzeichnet, dass** basierend auf der Fahrbahnebene geprüft wird, ob im Umgebungsbereich des Fahrzeugs auf der Fahrbahn Objekte vorhanden sind.

6. Verfahren nach Anspruch 5, **dadurch gekennzeichnet, dass** basierend auf den Informationen bezüglich der Fahrbahnebene die Größe eines Objekts und/oder die Höhe eines Objekts im Fahrbahnbereich geprüft wird.

7. Verfahren nach Anspruch 5 oder 6, **dadurch gekennzeichnet, dass** basierend auf der Höhe eines erkannten Objekts, d.h. der geometrischen Information, wie weit das Objekt gegenüber der Fahrbahnebene vorsteht, das Objekt klassifiziert wird.

8. Verfahren nach einem der vorhergehenden Ansprüche, **dadurch gekennzeichnet, dass** das künstliche neuronale Netz (3) basierend auf Informationen von Stereobildern, die während der Fahrt des Fahrzeugs aufgenommen werden und als der Fahrbahn zugeordnete Informationen gekennzeichnet sind, nachtrainiert wird.

9. Verfahren nach einem der vorhergehenden Ansprüche, **dadurch gekennzeichnet, dass** das künstliche neuronale Netz (3) die Disparitätsinformationen bereitstellt und die Berechnung der Abstandsinformationen aus den Disparitätsinformationen in einer separaten Recheneinheit erfolgt, oder dass das künstliche neuronale Netz (3) die Abstandsinformationen als Ausgangsinformation bereitstellt.

10. System zur Erkennung der Fahrbahnebene im Umgebungsbereich eines Fahrzeugs umfassend ein Stereokamerasystem (2) zur Erfassung von Stereobildern des Umgebungsbereichs des Fahrzeugs und ein künstliches neuronales Netz (3) zur Verarbeitung der von dem Stereokamerasystem (2) bereitgestellten Bildinformationen, wobei das neuronale Netz (3) dazu ausgebildet ist, Disparitätsinformationen des Umgebungsbereichs des Fahrzeugs zu ermitteln, wobei das neuronale Netz (3) oder eine vom neuronalen Netz (3) getrennt vorgesehene Recheneinheit dazu konfiguriert ist, basierend auf den Disparitätsinformationen Abstandsinformationen zu berechnen, die Informationen bezüglich des Abstands der auf den Bildinformationen dargestellten Objekten zu dem Stereokamerasystem (2) oder dem Fahrzeug enthalten, dass das neuronale Netz (3) oder die vom neuronalen Netz separat vorgesehene Recheneinheit dazu konfiguriert ist, Fahrbahnabstandsinformationen aus den Abstandsinformationen zu extrahieren und aus den Fahrbahnabstandsinformationen Informationen bezüglich der Fahrbahnebene zu ermitteln, **dadurch gekennzeichnet**, das die Recheneinheit dazu konfiguriert ist, die Fahrbahnebene dadurch zu bestimmen, dass eine Ebene gesucht wird, deren geometrische Lage im Raum derart gewählt ist, dass die durch das Stereokamerasystem (2) bereitgestellten Abstandsinformationen einen möglichst geringen Abstand zu dieser Ebene haben.

11. System nach Anspruch 10, **dadurch gekennzeichnet, dass** das System zum Empfang von Objektinformationen ausgebildet ist, die durch ein Umfeldmodell eines Fahrassistenzsystems des Fahrzeugs bereitgestellt werden und dass das System dazu ausgebildet ist, die Extraktion der Fahrbahnabstandsinformationen aus den Abstandsinformationen basierend auf den Objektinformationen zu vollziehen.

12. System nach Anspruch 10 oder 11, **dadurch gekennzeichnet, dass** das System dazu konfiguriert ist, die Extraktion der Fahrbahnabstandsinformationen aus den Abstandsinformationen dadurch zu vollziehen wird, dass von einem Stereobild oder den im Stereobild enthaltenen Abstandsinformationen aus einem Umfeldmodell eines Fahrassistenzsystems des Fahrzeugs erhaltene Informationen subtrahiert und/oder eliminiert werden.

13. System nach einem der Ansprüche 10 bis 12, **dadurch gekennzeichnet, dass** das System dazu konfiguriert ist, basierend auf den Informationen bezüglich der Fahrbahnebene zu prüfen, ob im Umgebungsbereich des Fahrzeugs auf der Fahrbahn Objekte vorhanden sind.

14. System nach Anspruch 13, **dadurch gekennzeichnet, dass** das System dazu konfiguriert ist, basierend auf den Informationen bezüglich der Fahrbahnebene die Größe eines Objekts und/oder die Höhe eines Objekts im Fahrbahnbereich zu prüfen, wobei basierend auf der Höhe eines erkannten Objekts, d.h. der geometrischen Information, wie weit das Objekt gegenüber der Fahrbahnebene vorsteht, das Objekt klassifiziert wird.

15. Fahrzeug umfassend ein System gemäß einem der Ansprüche 10 bis 14.

## Claims

1. A method for determining the roadway plane in the surrounding area of a vehicle, wherein the vehicle comprises a stereo camera system (2) for capturing stereo images of the surrounding area of the vehicle and an artificial neural network (3) for processing the image information provided by the stereo camera system (2), wherein the neural network (3) determines disparity information of the surrounding area of the vehicle, wherein, on the basis of the disparity information, distance information is calculated, which contains information relating to the distance of the objects displayed on the image information from the stereo camera system (2) or the vehicle, wherein roadway distance information is extracted from the distance information, wherein the roadway plane is determined on the basis of the roadway distance information, **characterized in that**, the roadway plane is determined by searching for a plane whose geometric position in space is selected such that the distance information provided by the stereo camera system (2) has the smallest possible distance to this plane.

2. The method according to claim 1, **characterized in that** the extraction of the roadway distance information from the distance information is performed on the basis of object information that is provided by an environment model of a driving assistance system of the vehicle.

3. The method according to claim 1 or 2, **characterized in that** the extraction of the roadway distance information from the distance information is performed by subtracting and/or eliminating information included in an environment model of a driving assistance system of the vehicle from information included in a stereo image or from the distance information contained in the stereo image.

4. The method according to any of the preceding claims, **characterized in that** the artificial neural network (3) compensates for calibration inaccuracies resulting from a relative movement of the two cameras (2.1, 2.2) of the stereo camera system (2) with respect to one another by a nonlinear correlation of the image information, namely in such a way that the artificial neural network (3) is trained to recognize the calibration of the cameras (2.1, 2.2) of the stereo camera system (2) from the detected disparity and to compensate for it.

5. The method according to any of the preceding claims, **characterized in that** it is checked on the basis of the roadway plane whether objects are present on the roadway in the surrounding area of the vehicle.

6. The method according to claim 5, **characterized in that** the size of an object and/or the height of an object in the roadway area is checked on the basis of the information relating to the roadway plane.

7. The method according to claim 5 or 6, **characterized in that**, on the basis of the height of an identified object, i.e. the geometric information how far the object protrudes from the roadway plane, the object is classified.

8. The method according to any of the preceding claims, **characterized in that** the artificial neural network (3) is retrained on the basis of information from stereo images acquired while the vehicle is in motion and which are labeled as information associated with the roadway.

9. The method according to any of the preceding claims, **characterized in that** the artificial neural network (3) provides the disparity information and the calculation of the distance information from the disparity information is performed in a separate computing unit, or **in that** the artificial neural network (3) provides the distance information as output information.

10. A system for identifying the roadway plane in the surrounding area of a vehicle, comprising a stereo camera system (2) for capturing stereo images of the surrounding area of the vehicle and an artificial neural network (3) for processing the image information provided by the stereo camera system (2), wherein the neural network (3) is configured to determine disparity information of the surrounding area of the vehicle, wherein the neural network (3) or a computing unit provided separately from the neural network (3) is configured to calculate, on the basis of the disparity information, distance information which contains information regarding the distance of the objects displayed on the image information from the stereo camera system (2) or the vehicle, wherein the neural network (3) or the computing unit provided separately from the neural network is configured to extract roadway distance information from the distance information and to determine information regarding the roadway plane from the roadway distance information, **characterized in that** the computing unit is configured to determine the roadway plane by searching for a plane whose geometric position in space is selected such that the distance information provided by the stereo camera system (2) has the smallest possible distance to this plane.

11. The system according to claim 10, **characterized in that** the system is configured to receive object information provided by an environment model of a driving assistance system of the vehicle and **in that** the system is configured to extract the roadway distance information from the distance information on the basis of the object information.

12. System according to claim 10 or 11, **characterized in that** the system is configured to extract the roadway distance information from the distance information by subtracting and/or eliminating information included in an environment model of a driving assistance system of the vehicle from information included in a stereo image or from the distance information contained in the stereo image.

13. The system according to any of claims 10 to 12, **characterized in that** the system is configured to check, on the basis of the information regarding the roadway plane, whether objects are present on the roadway in the surrounding area of the vehicle.

14. The system according to claim 13, **characterized in that** the system is configured to check, on the basis of the information regarding the roadway plane, the size of an object and/or the height of an object in the roadway area, wherein, on the basis of the height of an identified object, i.e. the geometric information how far the object protrudes from the roadway plane, the object is classified.

15. A vehicle comprising a system according to any of claims 10 to 14.

## Revendications

1. Procédé pour déterminer le plan de la chaussée dans la zone environnante d'un véhicule, le véhicule comportant un système de caméras stéréoscopiques (2) destiné à enregistrer des images stéréoscopiques de la zone environnante du véhicule, et un réseau neuronal artificiel (3) destiné à traiter les informations d'image fournies par le système de caméras stéréoscopiques (2),
dans lequel
le réseau neuronal (3) détermine des informations de disparité de la zone environnante du véhicule,
des informations de distance sont calculées sur la base des informations de disparité, qui contiennent les informations relatives à la distance entre les objets représentés sur les informations d'image et le système de caméras stéréoscopiques (2) ou le véhicule,
des informations de distance de la chaussée sont extraites des informations de distance,
le plan de la chaussée est déterminé sur la base des informations de distance de la chaussée,
**caractérisé en ce que** le plan de la chaussée est déterminé en recherchant un plan dont la position géométrique dans l'espace est choisie de telle sorte que les informations de distance fournies par le système de caméras stéréoscopiques (2) présentent une distance aussi faible que possible par rapport à ce plan.

2. Procédé selon la revendication 1,
**caractérisé en ce que** l'extraction des informations de distance de la chaussée à partir des informations de distance est effectuée sur la base d'informations d'objet fournies par un modèle d'environnement d'un système d'aide à la conduite du véhicule.

3. Procédé selon la revendication 1 ou 2,
**caractérisé en ce que** l'extraction des informations de distance de la chaussée à partir des informations de distance est effectuée en soustrayant et/ou en éliminant d'une image stéréoscopique ou des informations de distance, contenues dans l'image stéréoscopique, les informations obtenues à partir d'un modèle d'environnement d'un système d'aide à la conduite du véhicule.

4. Procédé selon l'une des revendications précédentes,
**caractérisé en ce que** le réseau neuronal artificiel (3) compense les imprécisions d'étalonnage, résultant d'un mouvement relatif des deux caméras (2.1, 2.2) du système de caméras stéréoscopiques (2) l'une par rapport à l'autre, par une corrélation non linéaire des informations d'image, et ceci de telle sorte que le réseau neuronal artificiel (3) est entraîné pour détecter et compenser l'étalonnage des caméras (2.1, 2.2) du système de caméras stéréoscopiques (2) à partir de la disparité détectée.

5. Procédé selon l'une des revendications précédentes,
**caractérisé en ce que**, sur la base du plan de la chaussée, il est vérifié si des objets sont présents sur la chaussée dans la zone environnante du véhicule.

6. Procédé selon la revendication 5,
**caractérisé en ce que**, sur la base des informations relatives au plan de la chaussée, la taille d'un objet et/ou la hauteur d'un objet dans la zone de la chaussée sont vérifiées.

7. Procédé selon la revendication 5 ou 6,
**caractérisé en ce que** l'objet est classifié sur la base de la hauteur d'un objet détecté, c'est-à-dire de l'information géométrique indiquant dans quelle mesure l'objet dépasse par rapport au plan de la chaussée.

8. Procédé selon l'une des revendications précédentes,
**caractérisé en ce que** le réseau neuronal artificiel (3) est réentraîné sur la base d'informations provenant d'images stéréoscopiques qui sont enregistrées pendant le déplacement du véhicule et qui sont identifiées comme des informations associées à la chaussée.

9. Procédé selon l'une des revendications précédentes,
**caractérisé en ce que** le réseau neuronal artificiel (3) fournit les informations de disparité, et le calcul des informations de distance à partir des informations de disparité se fait dans une unité de calcul séparée, ou
**en ce que** le réseau neuronal artificiel (3) fournit les informations de distance comme information de sortie.

10. Système de détection du plan de la chaussée dans la zone environnante d'un véhicule, comprenant un système de caméras stéréoscopiques (2) destiné à enregistrer des images stéréoscopiques de la zone environnante du véhicule, et un réseau neuronal artificiel (3) destiné à traiter les informations d'image fournies par le système de caméras stéréoscopiques (2),
dans lequel
le réseau neuronal (3) est conçu pour déterminer des informations de disparité de la zone environnante du véhicule,
le réseau neuronal (3) ou une unité de calcul prévue séparément du réseau neuronal (3) est configuré(e) pour calculer, sur la base des informations de disparité, des informations de distance qui contiennent des informations relatives à la distance entre les objets représentés sur les informations d'image et le système de caméras stéréoscopiques (2) ou le véhicule,
le réseau neuronal (3) ou l'unité de calcul prévue séparément du réseau neuronal est configuré(e) pour extraire des informations de distance de la chaussée à partir des informations de distance et pour déterminer des informations relatives au plan de la chaussée à partir des informations de distance de la chaussée,
**caractérisé en ce que** l'unité de calcul est configurée pour déterminer le plan de la chaussée en recherchant un plan dont la position géométrique dans l'espace est choisie de telle sorte que les informations de distance fournies par le système de caméras stéréoscopiques (2) présentent une distance aussi faible que possible par rapport à ce plan.

11. Système selon la revendication 10,
**caractérisé en ce que** le système est conçu pour recevoir des informations d'objets qui sont fournies par un modèle d'environnement d'un système d'aide à la conduite du véhicule, et **en ce que** le système est conçu pour effectuer l'extraction des informations de distance de la chaussée à partir des informations de distance sur la base des informations d'objets.

12. Système selon la revendication 10 ou 11,
**caractérisé en ce que** le système est configuré pour effectuer l'extraction des informations de distance de la chaussée à partir des informations de distance en soustrayant et/ou en éliminant d'une image stéréoscopique ou des informations de distance, contenues dans l'image stéréoscopique, les informations obtenues à partir d'un modèle d'environnement d'un système d'aide à la conduite du véhicule.

13. Système selon l'une des revendications 10 à 12,
**caractérisé en ce que** le système est configuré pour vérifier, sur la base des informations relatives au plan de la chaussée, si des objets sont présents sur la chaussée dans la zone environnante du véhicule.

14. Système selon la revendication 13,
**caractérisé en ce que** le système est configuré pour vérifier, sur la base des informations relatives au plan de la chaussée, la taille d'un objet et/ou la hauteur d'un objet dans la zone de la chaussée, un objet étant classifié sur la base de la hauteur de l'objet détecté, c'est-à-dire de l'information géométrique indiquant dans quelle mesure l'objet dépasse par rapport au plan de la chaussée.

15. Véhicule comprenant un système selon l'une des revendications 10 à 14.
